(19) Europäisches Patentamt
European Patent Office
Office européen des brevets

(11) Veröffentlichungsnummer : **0 082 350**
**B1**

(12) # EUROPÄISCHE PATENTSCHRIFT

(45) Veröffentlichungstag der Patentschrift : **03.04.85**

(51) Int. Cl.[4] : **C 07 F 9/52**

(21) Anmeldenummer : **82110976.6**

(22) Anmeldetag : **27.11.82**

(54) **Verfahren zur Herstellung von Methyldichlorphosphan.**

(30) Priorität : **17.12.81 DE 3149937**

(43) Veröffentlichungstag der Anmeldung : **29.06.83 Patentblatt 83/26**

(45) Bekanntmachung des Hinweises auf die Patenterteilung : **03.04.85 Patentblatt 85/14**

(84) Benannte Vertragsstaaten : **AT BE CH DE FR GB IT LI NL**

(56) Entgegenhaltungen :
**DE-B- 1 945 645**
**DE-C- 2 629 299**
**DE-C- 2 701 389**
**US-A- 3 210 418**

(73) Patentinhaber : **HOECHST AKTIENGESELLSCHAFT**
**Postfach 80 03 20**
**D-6230 Frankfurt am Main 80 (DE)**

(72) Erfinder : **Gehrmann, Klaus, Dr.**
**Geschwister-Scholl-Strasse 31**
**D-5042 Erftstadt (DE)**
Erfinder : **Ohorodnik, Alexander, Dr.**
**Kastanienweg 24**
**D-5042 Erftstadt (DE)**
Erfinder : **Rosenthal, Johannes, Dr.**
**Remigiusstrasse 32**
**D-5000 Köln 41 (DE)**
Erfinder : **Schäfer, Stefan**
**Wittelsbacher Strasse 21**
**D-5040 Brühl (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die DE-PS 26 29 299 und 27 01 389 beschreiben bereits ein Verfahren zur Herstellung von Methyldichlorphosphan durch Umsetzung von Methan und Phosphortrichlorid in Gegenwart von 3 bis 20 Mol% Tetrachlorkohlenstoff, berechnet auf das eingesetzte Phosphortrichlorid, bei Temperaturen oberhalb 500 °C, welches dadurch gekennzeichnet ist, daß man dem Ausgangsgemisch 2 bis 7 Mol% Tetrachlorkohlenstoff, berechnet auf das eingesetzte Phosphortrichlorid, als Starter zusetzt und bei konstanten Verweilzeiten von 0,1 bis 0,9 Sekunden durch Variieren der Reaktionstemperatur zwischen 500 und 650 °C den Tetrachlorkohlenstoff zu 50 bis 80 % umsetzt.

Gemäß diesem Stand der Technik wird die nach der Gleichung

$$PCl_3 + CH_4 \xrightarrow[> 500\ ^\circ C]{CCl_4} CH_3PCl_2 + HCl$$

verlaufende Reaktion bei Normaldruck durchgeführt, da unter den herrschenden Reaktionsbedingungen das Reaktandenvolumen vor und nach Reaktionsablauf unverändert bleibt und daher aufgrund kinetischer Überlegungen der Druck den Reaktionsablauf nicht beeinflussen dürfte. Bei Durchführung dieser Reaktion unter erhöhtem Druck waren demzufolge keine praktischen Vorteile zu erwarten.

Im Gegensatz zu den aus der Reaktionskinetik allgemein abzuleitenden Erwartungen wurde nun gefunden, daß die Durchführung dieser Reaktion unter Überdruck dennoch beträchtliche Vorteile erbringt. Dieser überraschende Befund ist theoretisch darauf zurückzuführen, daß die Bildung von Methyldichlorphosphan über eine durch Tetrachlorkohlenstoff initiierte Kettenreaktion mindestens einen druckabhängigen Teilschritt durchlaufen muß. Die Umsetzung von Phosphortrichlorid mit Methan in Anwesenheit von Tetrachlorkohlenstoff unter erhöhtem Druck führt in der Praxis einerseits zu einer beträchtlichen Verbesserung der Raum-Zeit-Ausbeute und andererseits zu einer bedeutsamen Reduzierung des Tetrachlorkohlenstoffbedarfs, bezogen auf die Masseneinheit des hergestellten Methyldichlorphosphans. Da sich der Tetrachlorkohlenstoff bei den hohen Reaktionstemperaturen zu verschiedenen Nebenprodukten wie Vinylchlorid, 1,1-Dichlorethylen, Tetrachlorethylen und Hexachlorethan umsetzt, führt eine Verminderung des Tetrachlorkohlenstoffgehaltes im Reaktionsgemisch zwangsläufig zu einem Absinken der gebildeten Nebenprodukte und somit zu einer Reduzierung des Aufwandes zur Beseitigung der umweltbelastenden Nebenprodukte.

Im einzelnen betrifft die Erfindung nun ein Verfahren zur Herstellung von Methyldichlorphosphan durch Umsetzung von Methan mit Phosphortrichlorid in Gegenwart von 2 bis 7 Mol% Tetrachlorkohlenstoff, berechnet auf das eingesetzte Phosphortrichlorid, bei Temperaturen von 500 bis 650 °C und einer Verweilzeit von 0,1 bis 0,9 Sekunden, welches dadurch gekennzeichnet ist, daß man die Umsetzung bei einem Druck von 2 bis 10 bar, vorzugsweise 3 bis 6 bar, durchführt und mit zunehmendem Druck die zugesetzte Menge Tetrachlorkohlenstoff vermindert.

Beispiele 1 bis 4

In ein 180 cm langes, elektrisch beheizbares, rostfreies Rohr (« Hastelloy-C »-Rohr) mit einem freien Reaktorvolumen von 778 $cm^3$ werden gasförmige Gemische im Molverhältnis $CH_4 : PCl_3 = 4 : 1$ bei konstanter Verweilzeit von 0,8 sec und konstanter Reaktionstemperatur von 580 °C unter Variation des Reaktionsdruckes eingeleitet. Das den Reaktor verlassende Reaktionsgemische wird stufenweise bis auf − 60 °C abgekühlt, das hierbei erhaltene Kondensat gaschromatographisch analysiert und die Befunde ausgewertet. In der nachstehenden Tabelle werden die für die Beurteilung der erfindungsgemäßen Arbeitsweise (Beispiele 2-4) ausschlaggebenden Versuchsergebnisse zusammengefaßt.

| Beispiel | Druck (bar) | Raum-Zeit-Ausbeute * (g MDP/l/h) | $CCl_4$-Bedarf (g/kg MDP) | erhaltene Cl-haltige Nebenprodukte (g/kg MDP) |
|---|---|---|---|---|
| 1 | 1,1 | 590 | 220 | 180 |
| 2 | 3,0 | 800 | 180 | 80 |
| 3 | 3,75 | 880 | 160 | 50 |
| 4 | 4,5 | 940 | 110 | 38 |

MDP = Methyldichlorphosphan

* Raum-Zeit-Ausbeute : g MDP je 1 l Reaktorvolumen und Stunde

Bemerkenswert ist ferner, daß die Druckerhöhung die Ausbeute nicht beeinträchtigt. In den angeführten Beispielen 1-4 liegt die Ausbeute jeweils um 98 % berechnet auf umgesetztes $PCl_3$.

## Ansprüche

1. Verfahren zur Herstellung von Methyldichlorphosphan durch Umsetzung von Methan mit Phosphortrichlorid in Gegenwart von 2 bis 7 Mol % Tetrachlorkohlenstoff, berechnet auf das eingesetzte Phosphortrichlorid, bei Temperaturen von 500 bis 650 °C und einer Verweilzeit von 0,1 bis 0,9 s, dadurch gekennzeichnet, daß man die Umsetzung bei einem Druck von 2 bis 10 bar durchführt und mit zunehmendem Druck die zugesetzte Menge Tetrachlorkohlenstoff vermindert.

2. Verfahren nach Anspruch 1, dadurch gekennzeichnet, daß man die Umsetzung bei einem Druck von 3 bis 6 bar durchführt.

## Claims

1. Process for making methyldichlorophosphane by reacting methane with phosphorus trichloride in the presence of 2 to 7 mol % carbon tetrachloride, based on the phosphorus trichloride used, at temperatures of 500 to 650 °C and over a period of time of 0.1 to 0.9 second, wherein the reaction is effected under a pressure of 2 to 10 bars, and the quantity of carbon tetrachloride added is reduced at increasing pressure.

2. Process as claimed in claim 1, wherein the reaction is effected under a pressure of 3 to 6 bars.

## Revendications

1. Procédé de préparation de méthyldichlorophosphine par réaction de méthane avec le trichlorure de phosphore en présence de 2-7 mol % de tétrachlorure de carbone, par rapport au trichlorure de phosphore, à des températures de 500-650 °C avec une durée de contact de 0,1-0,9 s, caractérisé en ce que l'on effectue la réaction sous une pression de 2-10 bars et on réduit la quantité de tétrachlorure de carbone ajoutée lorsque la pression augmente.

2. Procédé selon la revendication 1, caractérisé en ce que l'on effectue la réaction sous une pression de 3-6 bars.